Europäisches Patentamt

European Patent Office

Office européen des brevets

(19)

(11) Publication number: 0 042 716
A1

# (12) EUROPEAN PATENT APPLICATION

(21) Application number: 81302705.9

(22) Date of filing: 16.06.81

(51) Int. Cl.³: B 32 B 29/02
D 21 H 1/02, B 32 B 7/02

(30) Priority: 20.06.80 IT 2293380

(43) Date of publication of application:
30.12.81 Bulletin 81/52

(84) Designated Contracting States:
BE DE FR GB NL SE

(71) Applicant: Montedison S.p.A.
Patents & Licensing Dept. Foro Buonaparte, 31
I-20121 Milan(IT)

(72) Inventor: Martini, Emilio
82, Via Altopiano
Pontecchio Marconi Bologna(IT)

(72) Inventor: Lori, Domenico
15, Via Agnelli
Ferrara(IT)

(72) Inventor: Credali, Lino
22, Via Calari
Casalecchio di Reno Bologna(IT)

(74) Representative: Whalley, Kevin et al,
Marks & Clerk 57/60 Lincoln's Inn Fields
London WC2A 3LS(GB)

(54) Process for preparing multi-layer structures from sheets containing synthetic fibres.

(57) Sheets comprising thermoplastic synthetic fibres or blends thereof containing up to 95% by weight of cellulose fibres are made to adhere by inserting between the sheets a film of a thermoplastic polymer having:

(a) a melting temperature lower than that of the thermoplastic polymer constituting the synthetic fibres;

(b) a viscosity of less than $10^8$ poises, measured at a temperature of from a temperature exceeding by 10°C its melting temperature to a temperature exceeding by 20°C the melting temperature of the thermoplastic polymer constituting the synthetic fibres;

(c) a surface tension not exceeding by more than 5 dynes/cm the surface tension of the thermoplastic polymer constituting the synthetic fibres;

(d) a solubility parameter at 25°C in a ratio of from 0.85:1 to 1.15:1 to the solubility parameter of the thermoplastic polymer constituting the synthetic fibres;

by heating and compressing the laminate of sheets and film at a temperature of from a temperature exceeding by 10°C the melting temperature of the thermoplastic polymer constituting the film to a temperature exceeding by 20°C the melting temperature of the thermoplastic polymer constituting the synthetic fibres.

1.

"PROCESS FOR PREPARING MULTI-LAYER STRUCTURES FROM SHEETS CONTAINING SYNTHETIC FIBRES".

This invention relates to a process for preparing multi-layer structures from sheets containing synthetic fibres, and more particularly to a process for preparing bonded sheets of paper or paperboard, consisting totally or partially of fibres of thermoplastic synthetic polymers.

The bonding or lamination of two or more sheets of paper or paperboard with one another or with sheets or films of non-cellulose materials is a commonly utilized technique, especially in the preparation of materials for packaging, for obtaining composite sheets having the combined properties of the two or more component sheets, or for preparing sheets having a high substance, not directly obtainable by papermaking machines.

According to the conventional techniques, such bonding is achieved by applying an adhesive on the surfaces of the sheets and then by laminating the superimposed sheets in a press or between rollers, in order to attain the adhesion between the component sheets. Such techniques exhibit a few limitations due to the type of adhesive to be used in relation to the nature of the sheets, and to the high temperatures required, which cause degradation of the cellulose or of the other types of fibres which may be present.

2.

More recently, the availability of thermoplastic synthetic fibres suitable for totally or partially replacing the cellulose in the preparation of paper sheets or articles has permitted the preparation of bonded or laminated articles of the type described hereinbefore starting from sheets containing more or less high percentages of such fibres. These sheets are superimposed, then heated and compressed at a temperature higher than the melting temperature of the synthetic fibres therein contained, which therefore act as bonding agents between the various layers.

This method, which may be defined as the thermowelding method, exhibits however the drawback of requiring too high operating temperatures, generally exceeding by 20-30$^{\circ}$C the melting temperature of the thermoplastic polymer which forms the synthetic fibres contained in the sheets.

That happens because it is necessary, for purposes of adhesion, that the molten polymer should possess a certain mobility or flowability under the process conditions.

Such high temperatures are generally prejudical to the mechanical characteristics of the cellulose fibres, if any, contained in the sheets; furthermore they make it impossible to prevent complete melting of the remaining thermoplastic fibres contained in the structure and not involved in the adhesion between the sheets, and by consequence the loss of their fibrous morphology.

3.

Another drawback caused by the necessity of operating at such high temperatures resides in the fact that, under such conditions, a certain worsening of the mechanical properties of the sheets occurs, especially of the flexural modulus, which is particularly disadvantageous when the sheets must retain, at such temperatures, a prefixed shape, obtained for example by preceding drawing, embossing operations and the like.

The present invention provides a process for preparing a bonded article by thermowelding sheets containing fibres of thermoplastic polymer, comprising the following steps:

(I)    preparing sheets of fibrous material comprising synthetic fibres of at least one thermoplastic polymer, or comprising a blend of such fibres containing not more than 95% by weight of cellulose fibres referred to the weight of the blend;

(II)   superimposing at least two such sheets having inserted therebetween a film of at least one thermoplastic polymer having the following characteristics:

(a)   a melting temperature lower than the melting temperature of the thermoplastic polymer constituting the synthetic fibres present in the sheets;

(b)   a viscosity in the molten state of less than $1 \times 10^8$ poises, measured in a capillary viscosimeter, at a velocity gradient less than

4.

or equal to $10^{-1}$ seconds, and at a temperature of from a temperature exceeding by $10^{\circ}C$ the melting temperature of such polymer to a temperature exceeding by $20^{\circ}C$ the melting temperature of the thermoplastic polymer constituting the synthetic fibres present in the sheets;

(c) a surface tension not exceeding by more than 5 dynes/cm the surface tension of the thermoplastic polymer constituting the synthetic fibres present in the sheets, measured at the same temperature;

(d) a solubility parameter measured at a temperature of $25^{\circ}C$ which is in a ratio to the solubility parameter of the thermoplastic polymer constituting the synthetic fibres present in the sheets of from 0.85:1 to 1.15:1, extremes included;

(III) heating the laminate of the sheets and film superimposed therebetween at a temperature of from a temperature exceeding by $10^{\circ}C$ the melting temperature of the thermoplastic polymer constituting the film to a temperature exceeding by $20^{\circ}C$ the melting temperature of the thermoplastic polymer constituting the synthetic fibres present in the sheets; and

(IV) compressing the said laminate at the said temperature.

It has thus now been found that it is possible to prepare, by thermowelding operations, bonded sheets comprising thermoplastic synthetic fibres or blends of such fibres with cellulose, by operating at temperatures relatively lower than those previously necessary, if between the sheets intended for adhesion there is interposed a film of a thermoplastic polymer which has the following characteristics:

(a)  a melting temperature lower than the melting temperature of the thermoplastic polymer constituting the synthetic fibres present in the sheets;

(b)  a viscosity in the molten state, measured in a capillary viscosimeter, at a velocity gradient equal to or less than $10^{-1}$ seconds, and at a temperature of from a temperature exceeding by $10^{\circ}C$ the melting temperature of such polymer to a temperature exceeding by $20^{\circ}C$ the melting temperature of the thermoplastic fibres present in the sheets, of less than $1 \times 10^{8}$ poises, preferably less than $1 \times 10^{5}$ poises;

(c)  a surface tension not exceeding by more than 5 dynes/cm that of the polymer constituting such thermoplastic fibres, measured at the same temperature; and

(d)  a solubility parameter which is in a ratio to the solubility parameter of the polymer constituting such thermoplastic fibres of from 0.85:1 to 1.15:1, extremes included, such parameters being measured at $25^{\circ}C$.

By interposing such a film it is possible to obtain the adhesion by operating at lower temperatures than those previously required, in particular at those ranging from a temperature exceeding by 10$^{\circ}$C the melting temperature of the polymer constituting the film to a temperature exceeding by 20$^{\circ}$C the melting temperature of the polymer constituting the fibres.

In this way the above-mentioned drawbacks are greatly reduced or completely avoided.

In particular it is possible, and even preferable, to operate from a temperature exceeding by 10$^{\circ}$C the melting temperature of the polymer constituting the film to a temperature equal to the melting temperature of the polymer constituting the fibres, when the melting temperature of the polymer constituting the film is lower by at least 10$^{\circ}$C than the melting temperature of the polymer constituting the fibres.

With temperature values within this preferred range it is possible to achieve the adhesion even at temperatures below the melting temperatures of the thermoplastic fibres, without destroying their morphology.

As to the fibrous material present in the sheets which are intended for adhesion, it may consist only of synthetic fibres of at least one thermoplastic polymer, or of a mixture of such fibres with up to 95% by weight of cellulose fibres, referred to the total mixture of fibres.

Mineral fillers, pigments and the additives commonly used in conventional cellulose papers may be present in the sheets, admixed with the aforesaid fibrous material.

The term "sheets" whenever used herein means both elementary sheets, i.e. not belonging to structures composed of a plurality of layers of sheets, and sheets having the above-defined fibrous material composition which are part of such a multi-layer or composite structure and form at least one of the external faces or layers thereof. In the latter case the adhesion between the sheets involves the adhesion between such multi-layer structures, and it will be attained by inserting the polymeric film between the faces of such structures represented by the abovesaid external sheets.

The remaining layers constituting the composite structures intended for adhesion, since they are not involved in the thermoadhesion process, may optionally have the same fibrous composition as the layer or sheets external to them, as defined hereinabove, or may be constituted by cellulose fibres only or by synthetic fibres only, or by blends thereof in any ratio.

Therefore, by the term "preparation of sheets", whenever used herein, there is meant both the preparation of elementary sheets, and the preparation by means of which the sheets are obtained as being part of a fibrous structure formed by a plurality of superimposed layers,

8.

such sheets constituting at least one of the external faces of the structure.

Preparation of the sheets can be effected according to conventional papermaking methods, starting from dispersions in water, or in another inert liquid, of thermoplastic synthetic fibres, by using flat-table continuous machines or continuous machines with round molds. Aqueous suspensions containing from 0.7 to 1.5% by weight of fibrous material are preferably used.

The heating and compressing may be carried out simultaneously, in one step only.

As synthetic fibres constituting in whole or in part the sheets to be used in the process according to this invention, it is possible to employ fibres of the conventional type in the form of staple but preferably use is made of fibrils or fibrids of thermoplastic synthetic polymers having a surface area of at least $1 \text{ m}^2/\text{g}$. Such fibrils or fibrids are products long known as substituents of cellulose in the manufacture of paper or of related products. Generally their length ranges from 1 to 10 mm and their mean (apparent) diameter from 1 to 500 $\mu$.

The fibrils employable in the present process can be obtained according to any of the several processes described in the literature. In this connection mention is made of the methods described in British Patent Nos. 868,651 and 1,287,917, and in German patent application No. 2,208,553, according to which the fibres in question, otherwise called "fibrids", are obtained by precipitation of polymers from their solutions, or during the polymerization of the monomers, operating in the presence of cutting stresses; and furthermore in British patent Nos. 891,943 and 1,262,531, in US patent Nos. 3,770,856, 3,750,383 and 3,808,091, in Belgian patent No. 789,808, in French patent No. 2,176,858, and in German patent application No. 2,343,543, according to which the aforesaid fibrils are obtained in the state of more or less coherent aggregates or of fibrilled filamentary structures (plexifilaments) by extruding, through a spinneret, solutions, emulsions or dispersions of the polymers in one or more liquid media, in conditions of nearly instantaneous evaporation of the existing liquid phase (flash-spinning processes). In such a case the fibrous aggregates or plexifilaments so obtained can be easily disaggregated into continuous or elementary fibrils, having a surface area of at least $1 \text{ m}^2/\text{g}$, by means of cutting and/or refining operations.

Other methods by which it is possible to directly obtain fibrils suitable to be utilized in the process of the present invention are those described in Italian patent No. 947,919 and in Italian patent application No. 29,594 A/74, as well as in British patent Nos. 1,355,912 and 1,355,913.

The thermoplastic fibres, and in particular such

10.

fibrils or fibrids, may contain incorporated therein inorganic fillers, such as kaolin, talc and titanium dioxide, in amounts up to 70% by weight referred to the weight of the fibres so filled.

Blends of such fibres with thermoplastic fibres of the conventional type may be used as well. As cellulose fibres it is possible to utilize all the ones usually employed for making papers of the conventional type. Natural fibres of other types may also be present in the sheets as a partial substitute (less than 50%) of the cellulose fibres.

When the thermoplastic fibres which constitute, in whole or in part, the sheets intended for adhesion are blends of fibres of different polymers, the polymer constituting the film to be interposed between the sheets must meet all the conditions from (a) to (d) defined hereinbefore, in respect of at least one of the types of thermoplastic fibres which are present (or of the polymer forming such thermoplastic fibres).

In the case that the individual thermoplastic fibres should be made of a mixture of polymers instead of one type only of polymer, what is specified at characteristics (a) to (d) about the melting temperatures, the surface tension values and the solubility parameters of the polymers constituting the fibres is to be understood as referred to the corresponding values exhibited by such a mixture of polymers.

The thermoplastic polymer constituting the film may be any filmforming thermoplastic polymer, preferably having a crystallinity of at least 20%, provided it exhibits the characteristics (a) to (d) with respect to the thermoplastic polymer constituting the fibres present in the sheets.

Examples of polymers from which the film can be prepared are the olefinic polymers, such as polyethylene and polypropylene, the vinyl polymers, such as polyvinyl chloride, polyvinyl alcohol and polyvinyl acetate, polymethylmethacrylate, polystyrene, and furthermore the polyamides, polytetrafluoroethylene, the polyester resins, and mixtures of such polymers.

The melting temperature of a polymer is assumed to be the temperature at which the disappearance of the last crystallite in the polymer is observed under an optical microscope.

The solubility parameter of a polymer is expressed by the square root of the ratio between the cohesion energy of the molecules and the molar volume, and is often used to determine the characteristics of compatibility of polymers and solvents.

General methods of such determination are described by J. Brandrup and E.H. Immergut in "Polymer Handbook", Intersc. Publisher, 1966, paragraph 4, page 341 and following.

A particular determination method based on the principle of additivity of the contributions of the chemical groups, atoms and bonds present in the molecules to the total molar attraction forces was suggested and described by P.A.Small in Journal of Applied Chemistry 3.77,1953. There is reported hereinbelow the values of the solubility parameter at 25°C of some polymers, values calculated according to P.A. Small and which are referred to for the purposes of this invention.

| Polymer | Solubility parameter $\sqrt{cal/cc}$ |
|---|---|
| polyvinyl acetate | 9.22 |
| polymethylmethacrylate | 9.22 |
| polyethylene | 8.05 |
| polystyrene | 9.01 |
| polypropylene | 9.2 |
| polytetrafluoroethylene | 6.2 |
| polyvinyl alcohol | 12.6 |
| polyvinyl chloride | 10.2 |

The thermoplastic polymer film can be obtained according to any conventional method used for film-forming of the polymer, such as extrusion or molding.

The thickness of the film is not critical. However, films having thicknesses not exceeding 150 $\mu$, and in particular of from 5 to 40 $\mu$, are preferable since they permit the preparation of bonded sheets with shorter dwell times at the operating temperature.

The synthetic fibres present in the sheets to be caused to adhere according to the process of the present invention are preferably prepared from thermoplastic polymers having at least 20% crystallinity, such as low or high density polyethylene, polypropylene essentially consisting of isotactic macromolecules, ethylene/propylene random or block copolymers, poly-4-methyl-1-pentene, polyamides, polyesters, polyacrylonitrile, polyurethanes, polycarbonates, vinyl resins, such as polyvinyl chloride and polyvinyl acetate, ethylene/vinylacetate copolymers, acrylic resins in general, and polyethers.

When the heating step (III) is effected in the absence of pressure, it is possible to use for example a hot-air tunnel or a hot cylinder. When the heating step is operated under pressure it is possible to use a press or a calender consisting, for example, of a roller of resilient material, for instance rubber, and of another roller of hard material, for instance steel.

Preferably, but not necessarily, the heating step is operated with calenders working at from 10 to 100 $kg/cm^2$.

As previously specified, the temperature at which the heating step (III) is effected ranges from a temperature exceeding by $10^{\circ}C$ the melting temperature of the polymer constituting the film to a temperature exceeding, at the most, by $20^{\circ}C$ the melting temperature of the thermoplastic fibres present in the sheets, it being understood that such fibres, in the case of multilayer structures, are the thermoplastic fibres present in the layers or sheets which are in contact with the film surface.

The actual temperature at which the heating is carried out is selected within the defined range, from amongst those at which the polymer constituting the film assumes the previously defined values of viscosity (b) and surface tension (c), in case such values would not take place at all the heating temperatures comprised in the above-mentioned range.

In such a case the temperature at which bonding is achieved, according to the heating step (III), may be established on the basis of preliminary determinations of the viscosity and surface tension carried out on the polymer constituting the film.

The process of the present invention permits the preparation of papers or paperboards of any weight. Furthermore, the papers so obtained, having the same weight as compared with papers of cellulose only, or with mixed papers of cellulose/thermoplastic synthetic fibres, which have been subjected to heat treatment until melting of the synthetic fibres occurs, exhibit higher mechanical properties in dry conditions, although retaining the same thermoforming properties of the latter papers, even at a higher weight.

The process can be also utilized, with the same substantial advantages, for bonding sheets in which the synthetic fibrils have been previously thermo-molded (prior to their superimposition) by heating and optionally by simultaneous or successive compression of the sheets, and have therefore lost their fibrous morphology.

The invention will be further described with reference to the following illustrative Examples.

EXAMPLE 1

There was prepared a dispersion in water of a fiber blend consisting of 80% by weight of Kraft cellulose and 20% by weight of fibrils of high-density polyethylene (having a melting temperature of 135°C), the fibrils having the following characteristics:

- weighted mean length    = 3 mm
- mean (apparent) diameter = 16 $\mu$
- surface area            = 5 $m^2$/g.

In order to promote the dispersibility in water, the surfaces of such fibrils had been treated with acetalized polyvinyl alcohol, according to the process described in Italian patent No. 1,006,878.

From such a dispersion, having a fibre concentration of 4% by weight, sheets having, after drying, a weight of 200 g/$m^2$ and a thickness of 300 $\mu$ were prepared in a flat paper machine. Between two such sheets was interposed a film having equal dimensions and a thickness of 20 $\mu$, which consisted of low-density polyethylene( density = 0.906) having a melting temperature of 110°C. Such polyethylene exhibited, in the temperature range of from

16.

$120^{\circ}C$ to $155^{\circ}C$, a viscosity below $0.8 \times 10^5$ poises, determined in a capillary viscosimeter, at a velocity gradient less than or equal to $10^{-1}$ seconds, and furthermore a surface tension equal to that of the high-density polyethylene constituting the fibrils, and a solubility parameter in a ratio of 0.98 to that of the polymer constituting the fibrils.

The laminate of sheets and film was made to pass through a heating tunnel wherein it was brought to a temperature of $135^{\circ}C$ and while at such a temperature it was then conveyed, at a speed of 10 m/min, between the two rollers of a calender (one of which was made of rubber having a hardness equal to $80^{\circ}$ Shore, and the other of which made of steel), where it was subjected to a pressure of 100 kg/cm$^2$.

The resulting product was then subjected to an adhesion test between the component sheets. For this purpose, a sample strip of the product, having a width of 5 cm and a length of 180 cm, was opened in proximity of an edge by detaching the sheets, and the resulting edge was drawn at a speed of 10 cm/min, in order to separate 10 cm of one sheet from the other sheet, the strength necessary for such purpose being recorded. In the present case such strength was found to be 200 g/cm.

EXAMPLE 2 (comparative test)

Sheets of the same weight as those of example 1, but consisting only of Kraft cellulose refined at $28^{\circ}$ SR,

were bonded, with the polyethylene film described in example 1 inserted therebetween, according to the same procedure and conditions. The adhesion strength of the final product was found to be 50 g/cm. Operating under heating in a calender at a speed of 1 m/min instead of at 10 m/min, an adhesion strength of 60 g/cm was measured in respect of the final product.

EXAMPLE 3 (comparative test)

Example 1 was repeated, except that no polymeric film was inserted between the sheets intended for adhesion. The adhesion strength determined in respect of the final product was not measurable (being practically nil) at any speed, or dwell time, of the bonded article in the calender.

This operation was repeated at a heating temperature of 150°C; the result obtained was the same.

By means of successive tests and using the same sheets without inserting any polymeric film it was ascertained that it was possible to attain adhesion between the sheets, with an adhesion strength equal to 200 g/cm, only by heating and calendering at a temperature of 170°C. At such a temperature there was complete melting of the fibrils contained in the sheets as well as a weight loss of the cellulose, due to thermal degradation, of about 0.5% by weight, compared to an almost nil, or not measurable, weight loss when it was operated under the conditions of example 1.

The flexural modulus of the bonded articles, determined at $170^{\circ}$C, was lower by 30% than the value measured at $135^{\circ}$C.

EXAMPLE 4

According to the procedure described in example 1, sheets were prepared consisting of 80% by weight of Kraft cellulose fibres and 20% by weight of polypropylene fibres (melting temperature = $165^{\circ}$C), having a weighted mean length of 2.5 mm, a mean diameter of 18 $\mu$ and a surface area of 3 $m^2$/g.

The sheets had a weight of 200 $g/m^2$ and a thickness of 300 $\mu$. Two such sheets were superimposed with a high-density polyethylene film (melting temperature = $135^{\circ}$C) having a thickness of 20 $\mu$ inserted between them. The laminate of sheets and film was brought to $160^{\circ}$C in a hot-air tunnel, and then conveyed at such temperature to a calender similar to that utilized in example 1, where it was calendered under a pressure of 80 $kg/cm^2$, at a speed of 20 m/minute.

The polyethylene constituting the film utilized exhibited a viscosity, determined as previously explained, less than 1 x $10^5$ poises in the temperature range from $145^{\circ}$C to $185^{\circ}$C, a surface tension higher by 2 dynes/cm than that of the polypropylene fibrils, and a solubility parameter in a ratio of 0.92:1 to the solubility parameter of the polypropylene constituting the fibrils.

The adhesion between the sheets in the final product was 22 g/cm.

EXAMPLE 5

Two paper sheets were prepared, each composed of a layer having a weight of 100 g/m$^2$ and consisting of 10% of high-density polyethylene fibrils similar, as regards morphology and characteristics of the polymer to those of example 1, and 90% of raw Kraft cellulose, and of a second layer having a weight of 80 g/m$^2$ and consisting of 65% by weight of such polyethylene fibrils and 35% of such cellulose.

Each sheet was heated at 150$^o$C in a hot-air tunnel and then conveyed at such temperature to a calender operating at a pressure of 100 kg/cm and consisting of a steel roller cooled down to 50$^o$C and of a counterpart in the form of a rubber roller (hardness = 80$^o$ Shore).

Structures were obtained in the form of two-layer sheets where the fibrils were no longer identifiable.

Such structures had a weight of 177 g/m$^2$, a thickness of 250 $\mu$, and a Ring Crash Test (R.C.T.) value, according to standard SCAN P 34-71, of 1.2 K.Newton/m.

The resulting two-layer sheets were superimposed with a low-density polyethylene film having the same characteristics as that utilized in example 1 inserted therebetween, so that the film surface was in contact with the surface of the sheets or layers containing 10% of molten fibrils of polyethylene.

The adhesion of the laminate was achieved under conditions identical with those described in example 1 for the same operation. After adhesion the bonded articles had a weight of 374 g/m$^2$, a thickness of 500 $\mu$, and a R.C.T. value of 5.1 K.Newton/m.

A paper sheet of cellulose only of the same Kraft type, having a weight of 180 g/m$^2$ and a thickness of 280 $\mu$, exhibited a R.C.T. value of 1.9 KN/m; a paper sheet of the same type of cellulose having a weight of 380 g/m$^2$ and a thickness of 570 $\mu$ exhibited a R.C.T. value of 4.5 KN/m.

0042716

1.

<u>CLAIMS.</u>

1.    A process for preparing a bonded article by thermowelding sheets containing fibres of thermoplastic polymer,
characterized by comprising the following steps:

(I)   preparing sheets of fibrous material comprising synthetic fibres of at least one
thermoplastic polymer, or comprising a blend
of such fibres containing not more than 95% by
weight of cellulose fibres referred to the
weight of the blend;

(II)  superimposing at least two such sheets having
inserted therebetween a film of at least one
thermoplastic polymer having the following
characteristics:

(a)   a melting temperature lower than the
melting temperature of the thermoplastic
polymer constituting the synthetic fibres
present in the sheets;

(b)   a viscosity in the molten state of less
than $1 \times 10^{8}$ poises, measured in a
capillary viscosimeter, at a velocity
gradient less than or equal to $10^{-1}$ seconds,
and at a temperature of from a temperature
exceeding by $10^{\circ}C$ the melting temperature
of such polymer to a temperature exceeding
by $20^{\circ}C$ the melting temperature of the
thermoplastic polymer constituting the
synthetic fibres present in the sheets;

(c)   a surface tension not exceeding by more
      than 5 dynes/cm the surface tension of
      the thermoplastic polymer constituting
      the synthetic fibres present in the sheets,
      measured at the same temperature;

(d)   a solubility parameter measured at a
      temperature of 25$^o$C which is in a ratio
      to the solubility parameter of the thermoplastic polymer constituting the synthetic
      fibres present in the sheets of from
      0.85:1 to 1.15:1, extremes included;

(III)   heating the laminate of the sheets and
        film superimposed therebetween at a
        temperature of from a temperature
        exceeding by 10$^o$C the melting temperature
        of the thermoplastic polymer constituting
        the film to a temperature exceeding by
        20$^o$C the melting temperature of the
        thermoplastic polymer constituting the
        synthetic fibres present in the sheets;
        and

(IV)    compressing the said laminate at the
        said temperature.

2.   A process as claimed in claim 1, characterised in
that the heating and/or compression of the laminate is
effected at a temperature of from a temperature exceeding
by 10$^o$C the melting temperature of the thermoplastic
polymer constituting the film to the melting temperature of the thermoplastic polymer constituting the synthetic fibres present in the sheets when the melting temperature of the polymer constituting the film is lower by at least $10^{o}C$ than the melting temperature of the polymer constituting the fibres.

3. A process as claimed in claim 1 or 2, characterized in that the synthetic fibres are at least partly in the form of fibrils having a surface area of at least $1 \ m^2/g$.

4. A process as claimed in any of claims 1 to 3, characterized in that the viscosity in the molten state of the thermoplastic polymer constituting the film is less than $1 \times 10^5$ poises.

5. A process as claimed in any of claims 1 to 4, characterized in that the thermoplastic polymer constituting the film is polyethylene.

6. A process as claimed in any of claims 1 to 5, characterized in that the thermoplastic polymer constituting the film is low-density polyethylene, and in that the synthetic fibres present in the sheets are high-density polyethylene fibrils having a surface area of at least $1 \ m^2/g$.

7. A process as claimed in claim 6, characterized in that the heating step (III) and/or compression step (IV) are carried out at a temperature of from $120^{o}C$ to $135^{o}C$.

8. A process as claimed in any of claims 1 to 5, characterized in that the thermoplastic polymer constituting the film is high-density polyethylene, and in that the synthetic fibres present in the sheets are polypropylene fibrils having a surface area of at least 1 $m^2$/g.

9. A process as claimed in claim 8, characterized in that the heating step (III) and/or compression step (IV) are carried out at a temperature of from 145° to 165°C.

10. A process as claimed in any of claims 1 to 9, characterized in that the sheets constitute the external layers of a multilayer structure of which they are part.

11. A process as claimed in any of claims 1 to 10, characterized in that the sheets utilized for the superimposition step (II) have been previously subjected to heating with melting of the thermoplastic fibres present therein.

12. A process as claimed in claim 11, characterized in that the sheets utilized for the superimposition step have been also previously subjected to compression.

13. A bonded article obtained by the process as claimed in any of claims 1 to 12.

0042716

Application number

EP 81 30 2705

European Patent Office

**EUROPEAN SEARCH REPORT**

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | GB - A - 1 171 971 (I.C.I.) <br> * claims 1,5,6,11,12,15,21, 23,27,31,33,36,39; page 1, lines 55-72; page 2, lines 28-39; examples 3,9 * <br><br> -- | 1-3,5, 7-10, 13 | B 32 B 29/02 <br> D 21 H 1/02 <br> B 32 B 7/02 |
| A | US - A - 4 140 566 (A. BURTON) | | |
| A | GB - A - 1 386 438 (NIPPON PETROCHEMICALS) | | TECHNICAL FIELDS SEARCHED (Int. Cl.³) |
| A | GB - A - 1 500 542 (MONTEDISON) <br><br> ----- | | B 32 B <br> D 21 H 1/02 |
| | | | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

| | | | |
|---|---|---|---|
| The present search report has been drawn up for all claims | | | |
| Place of search <br> The Hague | Date of completion of the search <br> 25.09.1981 | Examiner <br> BLASBAND | |

EPO Form 1503.1  06.78